(19) Europäisches Patentamt / European Patent Office / Office européen des brevets

(11) **EP 2 649 305 B1**

(12) **EUROPEAN PATENT SPECIFICATION**

(45) Date of publication and mention
of the grant of the patent:
**18.02.2015 Bulletin 2015/08**

(21) Application number: **11819138.6**

(22) Date of filing: **01.12.2011**

(51) Int Cl.:
**F03B 13/18** *(2006.01)*     **F16H 31/00** *(2006.01)*

(86) International application number:
**PCT/TR2011/000270**

(87) International publication number:
**WO 2012/078120 (14.06.2012 Gazette 2012/24)**

(54) **POWER PLANT CHANGING SEA WAVE ENERGY INTO ELECTRIC ENERGY**

KRAFTWERK ZUR UMWANDLUNG VON MEERESWELLENENERGIE IN ELEKTRISCHE ENERGIE

CENTRALE ÉLECTRIQUE TRANSFORMANT L'ÉNERGIE DES VAGUES EN ÉNERGIE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2010 TR 201010200**

(43) Date of publication of application:
**16.10.2013 Bulletin 2013/42**

(73) Proprietor: **Deset Enerji Muhendislik Sanayi Ve Ticaret Limited**
**Ankara (TR)**

(72) Inventor: **GUNES, Yalcin**
**Ankara (TR)**

(74) Representative: **Iskender, Ibrahim**
**Destek Patent, Inc.**
**Lefkose Cad. NM Ofis Park**
**B Block No: 36/5 Besevler**
**16110 Bursa (TR)**

(56) References cited:
**WO-A1-2007/125538    GB-A- 893 100**
**GB-A- 191 403 691      US-A1- 2009 165 454**
**US-A1- 2010 043 425    US-A1- 2010 045 044**
**US-A1- 2010 300 223**

## Description

This invention is about a power plant changing the potential and kinetic energy within the wave motion into electric energy through the designed system. The pontoon element positioned on a main shaft is moved vertically up/down and this motion is transferred to the pulleys as rotary motion through the belt. As a result of the changing of linear motion into rotary motion, the input shaft of reducer is actuated both clockwise and counterclockwise. This two-way motion is changed into one-way rotary motion owing to the special design of the reducer and power is produced with the transfer of the motion to the alternator.

To maximize the vertical motion of the pontoon element, the potential energy of the wave during its vertical motion is utilized to the maximum through the designed system and at the same time the kinetic energy of the wave during its horizontal motion is changed into potential energy through this system and thus kinetic energy is significantly utilized to maximize the up-motion of the pontoon element. The pontoon element moving vertically with the effect of the waves might increase its weight by taking in water thanks to its structure. The pontoon element reaching the maximum height actuates the input shaft of the reducer clockwise while it performs downward free fall movement due to the loss of effect of the wave. The movement following the vertical fall movement shall be vertical upward movement of the pontoon with the effect of the wave. As a result of this movement, the pulley of the reducer shall be actuated counterclockwise. The pulley of the reducer, having been forced to turn clockwise and counterclockwise, shall be turned into rotary motion only clockwise at the output of the reducer owing to the special design of the reducer. The motion is transferred to the flywheel through the output shaft of the reducer. The energy transferred to the flywheel is stored via the mass inertia. Power transfer with a more fixed engine speed is possible by minimizing the changes in circulation as a result of the transfer of the motion to the alternator via the flywheel. As a result of the actuation of the alternator with the appropriate speed and torque, the aimed electric energy is produced.

The patent document US2010/043425 discloses a wave power plant, which is similar to the herein disclosed wave power plant. However, the main features characterising the herein disclosed system like the belt system and the wave guide wall are missing in the mentioned document.

To date, there have been many studies towards changing the energy in the waves into electric energy. The system we mentioned in our previous patent application no. 2009/08522 sets an example to one of these studies. While our previous action is similar to our new system, there are highly important differences between the two of them in terms of design and operation logic like the belt and pulley system, reducer system and flywheel element in our new system.

In our previous patent application no. 2009/ 08522, there are 3 A documents in the Examination Report by the Austrian Patent Office. These documents enlightening the prior art might be summarized as follows:

GR 1006476 B2 "Power Plant with the Energy of Coastal Waves"
It is a metallic structure positioned in the coast which produces electricity using the kinetic energy of the water mass moving with the sea waves. This kinetic energy is transferred to the pulley upon being caught by the energy collectors of special design. The motion in the pulley is changed into rotary motion with the help of a shaft and power current is produced with the help of a generator.

US 2007/0222221 A1 "Wave Generator Plant"
It is a production plant changing the sea waves into electric energy. The engine part of the plant uses the motion of the floating barge moving with the sea waves. This motion is turned into a rotary motion by a connecting rod and crankshaft. Electricity is produced while the rotary motion actuates the power generator via a gearbox.

US 2003/0227173 A1 "Floating Electric Power Plant Using the Sea Waves"
The invention is about a floating system offering different ways to change the up-wave motion into a rotary motion in the power generator shaft with a special torque. The wave motion moving vertically up/down is used as the primary power source.

In our patent application no.2009/08522, we provided the transfer of power through a hydraulic system. For this purpose, we placed four hydraulic drums circularly around the pontoon element. On each hydraulic drum, there is a hydraulic oil inlet and a hydraulic oil outlet. The low-pressure hydraulic oil line which is connected to the hydraulic oil inlet connects to the low-pressure hydraulic oil tank. The low-pressure hydraulic oil line coming out of the low-pressure hydraulic oil tank connects to the hydro motor. The hydraulic oil outlet on the hydraulic drums connects to the high-pressure hydraulic oil line and hydraulic accumulator. The high-pressure hydraulic oil line coming out of the hydraulic accumulator connects to the hydro motor and hydro motor is connected to the power-producing alternator via a hydro motor shaft transferring the rotary motion.

The design required for hydraulic systems which are supposed to be used for machines operating under sea conditions is really hard and high cost. Moreover, the identification, repair and maintenance of any faults occurring in a system operating under these conditions are hard and high cost. Other possible problem is that any faults in the hydraulic system shall lead to oil leakage into the sea, which in turn shall cause environmental pollution to an unacceptable degree for a clean and environmental-friendly power producing design. Due to these reasons, we have revised our system and designed a new system which prefers the transfer of motion and power via belts/ pulleys.

In our new system, the belt-pulley system has been used as the main mechanical power and motion transfer element. We decided that the belt-pulley system would be the most appropriate method to realize the function to change the linear motion into rotary motion and transfer power under the sea water and revised the system accordingly. The metallic parts might be subject to corrosion due to the fact that our invention operates under the sea water. Corrosion means inappropriate hard working conditions for machines. Mechanical problems might arise as a result of working for long terms under these conditions. The belt-pulley systems used as transfer elements for mechanical power and motion in the construction of machines display good working performances under hard working conditions (over temperature, dust, moisture, vibration etc). The belt-pulley system has the property to transfer the motion for prolonged terms and with lowest loss. Furthermore, it provides low fault ratio and minimum repair cost. The belt-pulley system is much more advantageous compared to the hydraulic systems in that it doesn't necessitate maintenance for long terms, is easy, quick and cheap to repair and is capable of transferring motion with high efficiency.

The common belt-pulley systems might be classified as flat belts, V-belts and gear belts. Flat belts are divided into three groups as leather, rubber and textile belts. Their resistance rates vary according to the main material used in the belts. They might make free vibration and lead to noise. Moreover, partial slip might arise based on the conversion rate. V-belts are comprised of two main materials, one of them being resistant (tensile) and the other being soft providing tensile strength and the ability to be twisted. The belt is usually coated with a protective layer made of rubber cloth to prevent the effect of the environment. Generally, rubber is used as the soft material and weaving and, more preferably, cord fabric or cables are used as the resistant material. V-belts might cause partial loss during working, lead to free vibration and need stretching during maintenance. The gear belts used in our system are in fact the mechanisms combining the properties of chain and belt-pulley mechanisms together. As the transfer of motion is realized through the clutching of gears inside the belt the gears over the pulley, the working principle of the mechanism is the same as that of the chain mechanism. On the other hand, the flexibility of the belt and its style of convolution on the pulley are similar to the belt mechanism. No partial or full slip occurs in the gear belts during working. Thus, the conversion rate remains fixed. As there is no need for a running clearance between belt gears and pulley gears, the motion might be synchronized with great sensitivity. The high flexibility of the gear belts used in our system leads to the use of small diameter pulleys. When the belt is made of an elastic material, it is very capable of meeting and decaying impacts. It cannot transfer the sudden growth of loads and serves as a safety element. The conversion rate might be changed using cone pulleys. At it needs very little stretching, the shafts and beds are not overloaded. Moreover, it doesn't need greasing and works silently.

Another new system used in our new invention capable of changing the energy within the waves into electric energy is the reducer element with a special design. There are important differences in terms of the functions of the existing reducers in the reducer system used our new design. This new reducer reduces the high speeds to the required speeds and serves as a machine element transferring power and motion and at the same time is an invention in that it affects the reducer input and turns the clockwise and counterclockwise motions to clockwise. Thanks to two one-way bearings put inside the reducer, two opposite movements might be turned to one single way. The reducer might also reduce the high-speed motions as much as desired. A running speed corresponding to the running speed range of the alternator is ensured via the reducer. This process (speed-reducing process) is realized by the gears within the reducer.

The common reducer types might be classified as helical gear reducers, conical gear reducers, worm gear reducers and spur gear reducers. The reducers comprising of gear mechanisms reducing the high turnovers to the required turnovers are closed systems consisting of elements like gear wheels, shafts and beds placed inside the trunk in terms of construction. They transfer power through the gears among the shafts situated in a variety of positions.

The gear surface of the helical gear reducers is helical. The rotary motion coming to the input shaft is first transferred to the rotary motion input gear and then to the other gears. The motion transferred one-way might be transferred in the direction of the input shaft or with a specific angle.

Conical gear reducers provide the transfer of the motion coming to the input shaft with a specific angle. When the motion comes to the input shaft, it reaches the input gear. The input gear transfers the motion to the other conical gear which is contacting itself. Depending of the cone angle, the motion might be transferred to the output shaft at various angles. Their movement is unidirectional.

Worm gear reducers are the reducers having the ever-rotating, never-moving input gears. They are special spiral mechanisms which do not intersect and are not parallel to each other and which transfer power and motion between two shafts. During the course of operation, there is a slip between the gear and the screw. Therefore, their efficiency is low. Their movement is unidirectional.

In spur gear reducers, the motion coming to the input shaft rotates the gear embedded in the same shaft in the same direction. This gear rotates the other gear parallel to itself. Thus, the movement is transferred. If these two gears are different in diameter, the transferred motion and power is reduced or increased accordingly. The gears transferring the motion contact each other (along a straight line). In all known reducer types, the output shaft of the reducer rotates in the same direction of rotation of the input shaft of the reducer or makes fixed rotation in the opposite direction. Unlike the other known reducer systems, in our new reducer system designed specifically for our system, the clockwise motions affecting the input shaft of the reducer and rotary motions affecting the input shaft counterclockwise turn into clockwise rotary movements at the output shaft of the reducer. Thus, the power within both the clockwise and the counterclockwise movement is transferred clockwise to the alternator and the energy is produced.

All the energy within the wave is utilized to the maximum and a serious power production potential emerges through the system we designed in our study called "Power Plant Changing Sea Wave Energy into Electric Energy and Production Method". The pontoon element has been designed to take in water from the outer environment into the pontoon or discharge water as ballast. This way, it might change its total weight and increase the potential energy obtained from different waves to the maximum value. Fixing the main shaft from the bottom and the tap restricts the effect of horizontal forces which the wave motions shall affect on the shaft. The shaft's being perpendicular to the ground reduces the drag force affecting horizontally and the energy losses to the minimum level. Moreover, the potential and kinetic energy of the waves are used more efficiently through shear and waveguide wall.

Because the system is situated on the seaside, not on the coast or in the open sea, the transfer of energy and access to the system shall be very easy. Its adaptability to different wave heights and flexibility to be designed at larger sizes, the great increases in the amounts of obtained energy as the size gets larger and the wave height increases are among the important advantages of the system. While the system reduces the dependency on fossil fuels, it shall ensure that the natural resources are used efficiently. Moreover, it shall cause no harm to the environment as it is a clean energy source. When it has been placed side-by-side on the shores, it shall be used as a breakwater and thus provide different benefits like marina, fishing port etc.

Enclosed, the system designed to reach the aim of the invention has been shown and among them;

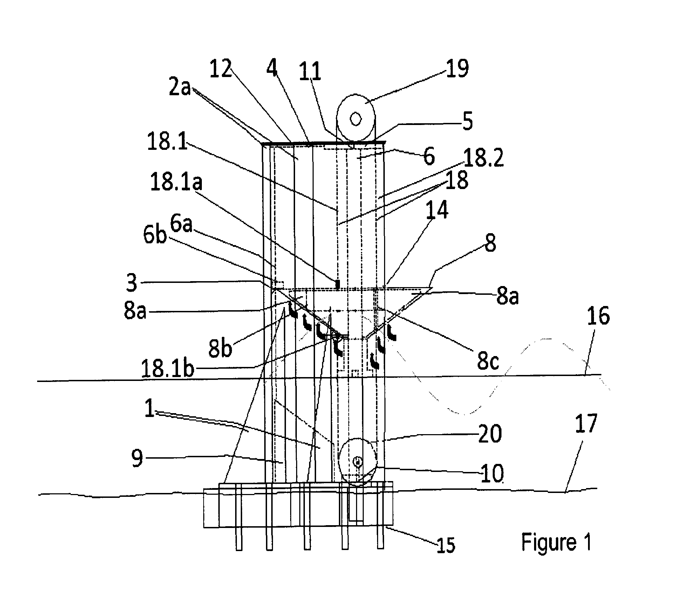

Figure 1 - is the side view of the Power Plant.

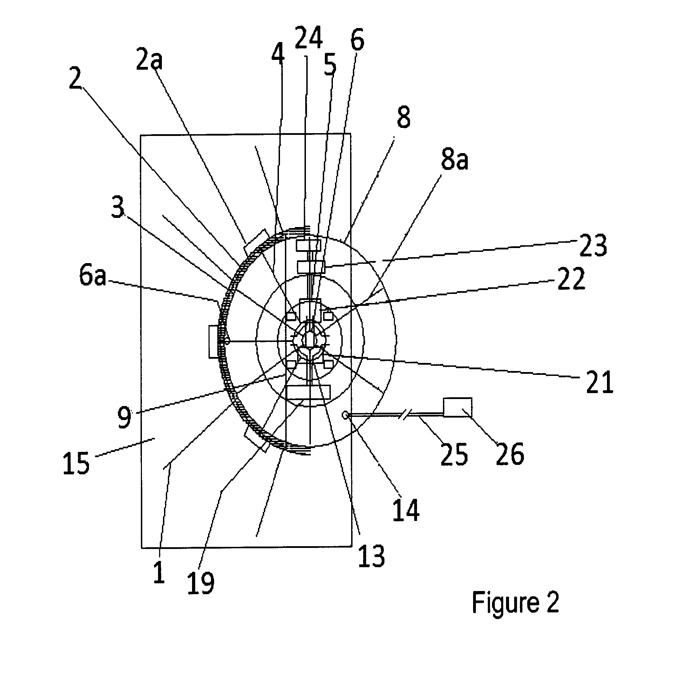

Figure 2 - is the top view of the Power Plant.

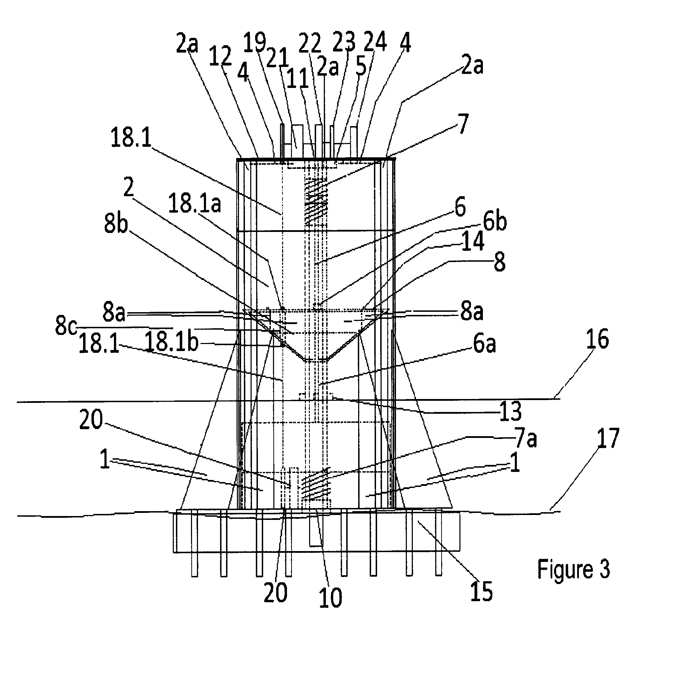

Figure 3 - is the back view of the Power Plant.

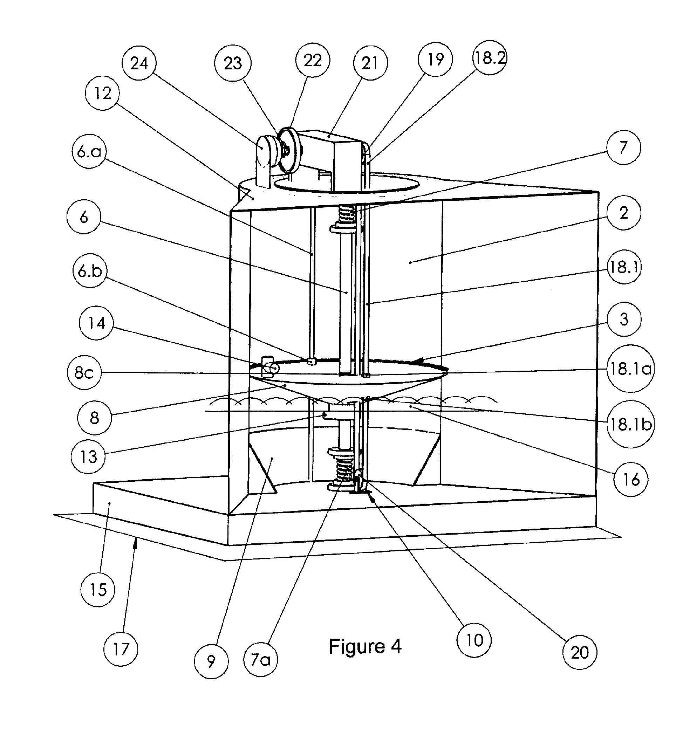

Figure 4 - is the 3D general equipment view of the Power Plant.

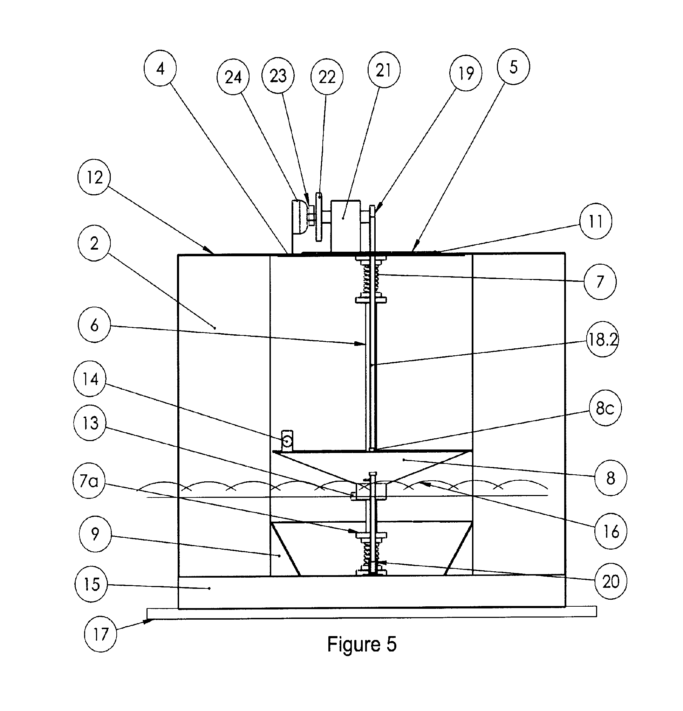

Figure 5 - is the 3D front view of the Power Plant.

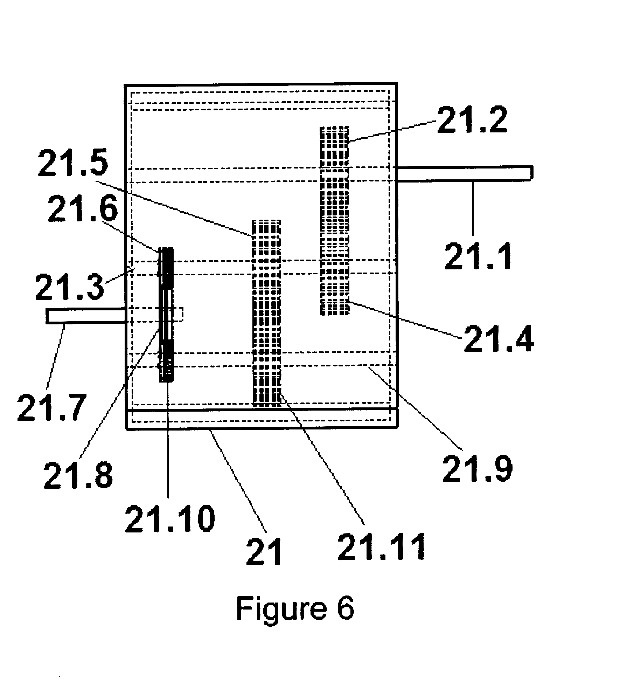

Figure 6 - is the side view of the Reducer.

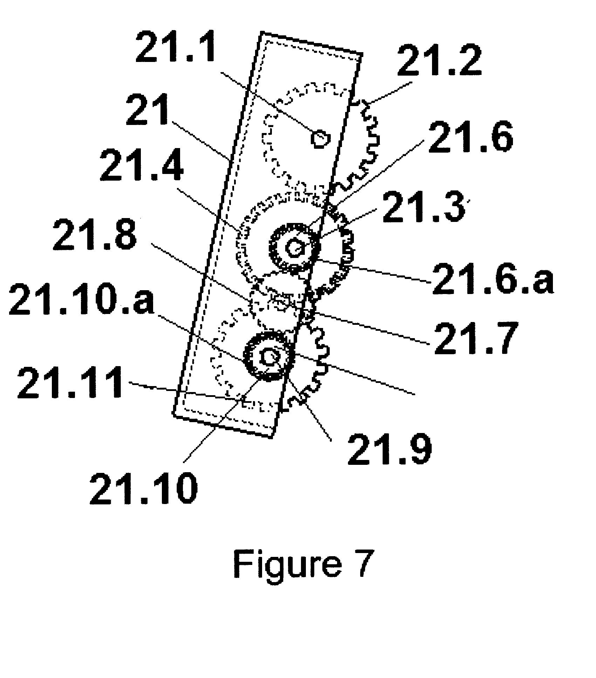

Figure 7- is the top view of the Reducer.

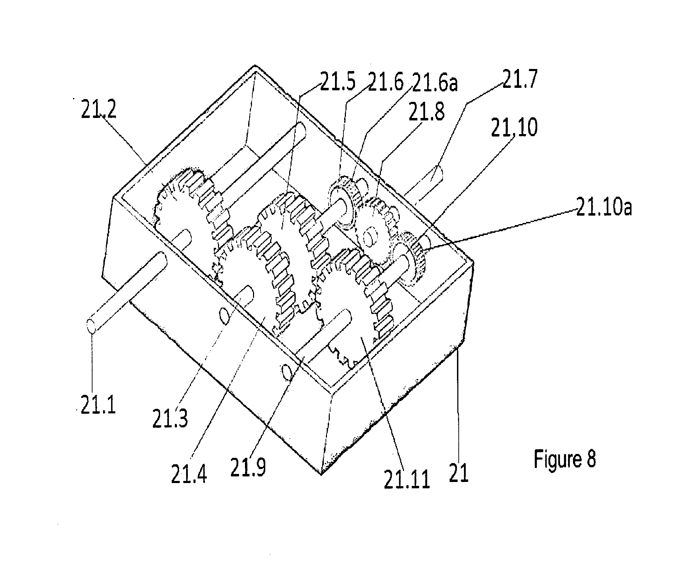

Figure 8- is the 3D top view of the Reducer.

The parts in the figures have been numbered and their correspondents are as follows.

1) Shear wall support structure
2) Shear wall
2a) Shear wall supporting profiles
3) Sealing gasket
4) Attachment
5) Main shaft connector plate
6) Main shaft
6a) Auxiliary shaft
6b) Embedding element
7) Upper Spring
7a) Lower spring
8) Pontoon element
8a) Winglet
8b) Circular wall
8c) Belt transition channel
9) Waveguide wall
10) Main shaft lower fixing point
11) Main shaft upper fixing point
12) Platform
13) Water inlet/ outlet
14) Air inlet/outlet
15) Foundation system
16) Still water level

17) Sea bottom
18) Belt Ring
18.1) 1st Belt shifter
18.1 a) 1st Belt shifter top fixing point
18.1b) 1st Belt shifter bottom fixing point
18.2) 2nd Belt shifter
19) 1st Pulley
20) 2nd Pulley
21) Reducer
21.1) Input shaft of reducer
21.2) 1st Gear
21.3) 1st Cone shaft
21.4) 2nd gear
21.5) 3rd Gear
21.6) 1st Bearing
21.6a) 1st Bearing Gear
21.7) Output Shaft of Reducer
21.8) 4th Gear
21.9) 2nd Cone Shaft
21.10) 2nd Bearing
21.10a) 2nd Bearing Gear
21.11) 5th Gear
22) Flywheel
23) Clutch
24) Alternator
25) Aerial line
26) Air compressor

In the system created for that purpose, there is a pontoon element (8) moving vertically over the main shaft (6). The pontoon element (8), normally situated at the still water level (16) vertically changes direction with the wave motion. The main shaft (6) has been anchored to the foundation system (15) with the main shaft lower fixing point (10) situated at the bottom part of the main shaft (6) and the foundation system (15) has been settled onto the sea bottom (17). The main shaft (6) has been anchored to the main shaft connector plate (5) with the main shaft upper fixing point (11). Moreover, the main shaft (6) gets through the upper spring (7) anchored to the bottom of the platform (12) and through the lower spring (7a) anchored to the foundation system (15). The auxiliary shaft (6a) has been placed in parallel with the main shaft (6). The auxiliary shaft (6a) has been anchored to the platform (12) at the top point and to the foundation system (15) at the bottom point. The auxiliary shaft (6a) also gets through the embedding element (6b) anchored to the pontoon element (8).

The main shaft connector plate (5) has been connected to the shear wall supporting profile (2a) which has been anchored to the foundation system (15) with the help of the attachment (4) and consists of U profile. The shear wall (2) supported by the shear wall supporting profiles (2a) is semicircular and rises parallel to the main shaft (6). The shear wall support structure (1) is situated at the back part of the shear wall (2) and the waveguide wall (9) is situated at the front part. The shear wall support structure (1), shear wall supporting profiles (2a) and waveguide wall (9) anchored on the foundation system (15) have been anchored to the shear wall (2), thus contributing to the stability of the shear wall (2). The platform (12) where the shear wall supporting profiles (2a) rise over the shear wall (2) has been anchored to the shear wall supporting profiles (2a). On this platform (12), 1.pulley (19), reducer (21), flywheel (22), clutch (23), alternator (24), aerial line (25) and air compressor (26) are situated.

Water inlet/ outlet (13) is situated on the cylindrical part lying at the bottom part of the pontoon element (8) moving vertically on the main shaft (6) and air inlet/ outlet (14) is situated on the top part of the pontoon element (8). Six winglets (8a) placed perpendicular to the main shaft (6) inside the pontoon element (8) and the elements of the circular wall (8b) placed circularly in parallel with the main shaft (6) lead to the forming of cells within the pontoon element (8). Sealing gasket (3) is placed between the pontoon element (8) and the shear wall (2) to provide water tightness property.

The belt ring (18) enabling the linear motion obtained from the pontoon element (8) with the effect of the waves to be transferred to the 1st pulley (19) and thus enabling the linear motion to be changed into rotary motion is comprised of 1st belt shifter (18.1) and 2nd belt shifter (18.2). 1st belt shifter (18.1) has been anchored to the 1st belt shifter top fixing point (18.1 a) placed on the pontoon element (8) at the top and to the 1st belt shifter bottom fixing point (18. 1 b) placed under the pontoon element (8) at the bottom. The 1st belt shifter (18.1) is placed between the 1st pulley (19) positioned on the platform (12) and the 2nd pulley (20) positioned on the foundation system (15). The 2nd belt shifter (18.2) goes through the belt transition channel (8c) placed inside the pontoon element (8) and is situated between the 1st pulley (19) and the 2nd pulley (20). The movement of the belt ring (18) consisting of the 1st belt shifter (18.1) and the 2nd belt shifter (18.2) is exactly transferred to the 1st pulley (19) and the 2nd pulley (20) connected to the belt ring (18). The 2nd pulley (20) ensures that the belt ring (18) is tense and operates in the desired position. The 1st pulley (19) changes the linear motion of the belt ring (18) into rotary motion and allows for its transfer to the input shaft of the reducer (21.1).

The input shaft of the reducer (21.1) anchored to the 1st pulley (19) is embedded to the reducer (21) box by going through the 1st gear (21.2). The reducer (21) box is comprised of a closed metallic box which includes the input shaft of the reducer (21.1), 1st gear (21.2), 1st cone shaft (21.3), 2nd gear (21.4), 3rd gear (21.5), 1st Bearing (21.6), 1st bearing gear (21.6a), output shaft of the reducer (21.7), 4st gear (21.8), 2nd cone shaft (21.9), 2nd bearing (21.10), 2nd bearing gear (21.10a) and 5th gear (21.11).

The 1st gear (21.2) transfers the motion and power from the input shaft of the reducer (21.1) to the 2nd gear (21.4). 2nd gear (21.4) allows for the reception of the motion and power from the 1st gear (21.2) and their transfer to the 1st cone shaft (21.3). The 1st cone shaft (21.3) carries the 1st bearing (21.6), 1st bearing gear (21.6a), 3rd gear (21.5) and 2nd gear (21.4) and is embedded to the reducer (21) box at both ends. 3rd Gear (21.5) allows for the reception of motion and power from the 1st cone shaft (21.3) and their transfer to the 5th gear (21.11). 1st Bearing (21.6) allows for the one-way transfer of the motion from the 1st cone shaft (21.3) and carries 1st bearing gear (21.6a). 1st bearing (21.6) is a special gearing rotating only unidirectionally. 1st Bearing gear (21.6a) transfers the one-way motion from the 1st bearing (21.6) to the 4th gear (21.8). 4th Gear (21.8) has been positioned between the 1st bearing gear (21.6a) and 2nd bearing gear (21.10a) and transfers the motion from the 1 st bearing gear (21.6a) and 2nd bearing gear (21.10a) to the output shaft of the reducer (21.7). The output shaft of the reducer (21.7) transfers the motion and power from the 4th gear (21.8) to the flywheel (22). The output shaft of the reducer (21.7) carries the 4th gear (21.8) and has been embedded to the reducer (21) box at one end. 2nd cone shaft (21.9) carries the 5th gear (21.11), 2nd bearing (21.10) and 2nd bearing gear (21.10a) and has been embedded to the reducer (21) box at both ends. The 2nd Cone shaft (21.9) transfers the motion and power from the 5th gear (21.11) to the 2nd bearing (21.10). 2nd Bearing (21.10) allows for the one-way transfer of the motion from the 2nd cone shaft (21.9) to the 2nd bearing gear (21.10a) and carries the 2nd bearing gear (21.10a). 2nd Bearing (21.10) is a special bearing rotating unidirectionally. 2nd Bearing gear (21.10a) transfers the one-way motion from the 2nd bearing (21.10) to the 4th gear (21.8). 5th Gear (21.11) transfers the motion and power from the 3rd gear (21.5) to the 2nd cone shaft (21.9).

The motion from the 2nd cone shaft (21.9) is transferred to the flywheel (22). The kinetic energy of the rotary motion transferred to the flywheel (22) is stored on the flywheel (22). This motion is transferred to the alternator (24). The speed and torque within this motion enables the alternator (24) to produce electricity.

While the resulting wave motions move forward horizontally, their vertical movement is upward and downward. While the upward and downward motions the wave performs vertically is the main power source from which the system shall produce electricity, an important proportion of the kinetic energy within the wave shall be used in the production of electricity having been changed into potential energy.

The wave shall reach the pontoon element (8) while moving forward. The pontoon element (8) is composed of a truncated conical structure of about 6 meters in diameter through which the main shaft (6) goes and the cylindrical part extending downwards from the bottom part of this truncated conical structure. The important point here is to utilize the energy within the wave to the maximum. For this purpose, the truncated conical structure has been designed taking into consideration the wing flap structure designed using the basic principles of the fluid mechanics and the forces on this structure. By forming a specific angle between the flight route and the chord line going through the center of the wing (the line going through the starting point of the front part of the wing and the ending point of the back trailing end) while the gliders and planes are on the move, we aim at obtaining a maximum levitation force by trying to maximize the pressure force affecting the wing from the bottom and causing it to rise and to minimize the opposite pressure force affecting from the top. The maximum attack angle to be formed to realize that is about 15-20 degrees. Taking the same principles as basis in this invention, we aimed at forming a specific angle between the wave and the surface it struck at the time of crush to form the maximum lift force in the fluid water. For this purpose, we aimed at placing the conical structure forming the main trunk of the pontoon element (8) to set a 20-degree angle to the sea bottom (17) compared to the parallel surface. However, we needed to increase the upper diameter of the truncated conic and decrease its lower diameter to form a 20-degree angle. However, as we designed a conical structure of 6 meters in diameter, the positive effect arising from the shear wall (2) structure compensated the losses arising from the angle and allowed for the more efficient use of the energy to lift the system upwards when the angle was optimized as 30-35 degrees without any enlargement.

The weight of the pontoon element (8) needs to be increased to maximize its potential energy in the height it reaches as a result of the rise of the wave motion. The weight shall be adjusted with the amount of water to be taken in or discharged from the pontoon element (8). For this purpose, a water inlet/ outlet (13) has been placed at the lowermost part of the cylindrical part at the bottom of the pontoon element (8). At the upper part of the pontoon element (8), between the pontoon element (8) and the air compressor (26) lies the pressure aerial line (25) which allows for the transfer of air.

The function to take in or discharge ballast water from the pontoon element (8) is performed by increasing or reducing the internal air pressure of the pontoon element (8). Reduction of the internal air pressure of the pontoon element (8) is only possible through air discharge, in this case, the pontoon element (8) shall take in water. Increase of the internal air pressure of the pontoon element (8) is only possible through the discharge of water in the pontoon element (8). The air inlet/ outlet (14) on the pontoon element (8) has been connected to the air compressor (26) via the aerial line (25).

To minimize any negative effects of the sloshing motions within the water taken in the pontoon element (8) on the vertical movements of the pontoon element (8), we have placed six winglets (8a) perpendicular to the main shaft (6) to form cells within the pontoon element (8). Moreover, we have also formed a partition wall which we call as circular wall (8b) and which goes through these cells and has been mounted in parallel with the main shaft (6) and circularly within the pontoon element (8). Through this system, we minimized any fluctuations within the pontoon element (8) and strengthened the main spine of the pontoon element (8) thanks to the winglets (8a).

Another important point in the system is that we make use of the energy of the wave flowing under the conical structure. For this purpose, we have created a semi-circular shear wall (2) and a waveguide wall (9) behind the main shaft (6) and the pontoon element (8). The center of the semi-circular shear wall (2) is the main shaft (6) and the shear wall (2) rises in parallel with the main shaft (6). The waveguide wall (9), which is located at the frontal part of this shear wall (6), unites with the shear wall (2) by rising at an angle from the foundation system (15) and continues along the semi-circular shear wall (2), and has been mounted to the shear wall (2). When the remaining part of the vertical potential power of the wave affecting the conical structure and its horizontal kinetic energy have reached the structure comprising of the waveguide wall (9) and the shear wall (2), the wave motion shall be directed upwards owing to the geometric shape of the structure and the energy within the wave shall lift the pontoon element (8) upwards. Thus, the motion energy of the wave shall be used more efficiently. Moreover, as the waveguide wall (9) and the shear wall (2) has been anchored to each other, the waveguide wall (9) shall add to the stability of the shear wall (2) under the acting loads. Furthermore, the shear wall support structure (1) behind the shear wall (2) and shear wall supporting profiles (2a) shall help to protect the stability of the shear wall (2) against the loads to act on the shear wall (2).

Another important point is that, we have prevented any horizontal replacement of the system which consists of a structure in which the main shaft (6) has been fixed to the main shaft connector plate (5) via the main shaft upper fixing point (11). Moreover, the main shaft connector plate (5) has been fixed to the shear wall supporting profile (2a) with the help of the attachment (4) and, at the bottom part, the main shaft (6) has been fixed to the foundation system (15) via the main shaft lower fixing point (10) in the system. Here, shear wall supporting profiles (2a) are connected to the foundation system (15) and consist of U profiles anchored to the shear wall (2). Anchoring the main shaft (6) from the bottom and the top prevents the unwanted drift motion effect of the main shaft (6) and thus pontoon element (8) as a result of the horizontal movements of the waves. During the vertical movements of the pontoon element (8) under the guide of the main shaft (6), any increases in the drift force and potential losses of energy to arise owing to the angle to be formed by the horizontal movement of the main shaft (6) shall be avoided by preventing these movements, and the physical life of the main shaft (6) shall be extended. The upward movement of the pontoon element (8) shall be facilitated by the sealing gasket (3) placed between the pontoon element (8) and shear wall (2) and any losses in the water mass under pressure due to compaction shall be minimized. Thus, the use of buoyancy of water acting on the pontoon element (8) at the bottom shall be maximized.

The pontoon element (8) uses all energy within the wave to perform its conditioned motion. However, the pontoon element (8) might rotate axially around the main shaft (6). Axial rotation movement factor prevents the system from running. Thus, our design prevents axial rotation and the auxiliary shaft (6a), which is another shaft, has been embedded to the shear wall (2). The auxiliary shaft (6a) has been placed in parallel with the main shaft (6). The auxiliary shaft (6a) has been anchored to the platform (12) at its upper part and to the foundation system (15) at the lower part. The auxiliary shaft (6a) goes through the embedding element (6b) which has been anchored to the pontoon element (8) at one end. Thanks to the auxiliary shaft (6a), the pontoon element (8) cannot perform its axial rotation movement and is only allowed to perform the desired upwards/ downwards movement.

To prevent the pontoon element from harming the foundation system (15) and the upper platform (12) by crashing them under stormy sea conditions, 2 spiral springs (7, 7a) have been included in the system. The main shaft (6) goes through the upper spring (7) from the top and through the lower spring (7a) from the bottom. The upper spring (7) has been anchored to the platform (12) only at its upper end. Thus, when the pontoon (8) over-rises, it shall crash against the upper spring element (7) and use its energy to compress the upper spring (7). The tension on the upper spring (7) shall be transferred back to the pontoon element (8) in the opposite direction. Likewise, the lower spring (7a) prevents the pontoon (8) from crashing against the foundation system (15) and allows for the energy to be transferred back to the pontoon (8) in the opposite direction. The lower spring (7a) has been anchored to the foundation system (15) at one end.

The bed waves which do not contact with the pontoon element (8) shall be directed towards underneath the pontoon by the waveguide wall (9), thus contributing positively to the upwards movement of the pontoon (8). Any irregular wave approaching towards the system shall crash against the waveguide wall (9) and be directed towards the pontoon element (8). The pontoon element (8) shall move upward movements with the effect of the waves and downward movements with the effect of its weight. Therefore, it shall move the belt ring (18) upwards or downwards.

The upward movement of the pontoon element (8) shall lead to tension at the 1st belt shifter bottom fixing point (18.1 b). The more upwards the pontoon element (8) moves, the higher the 1st belt shifter bottom fixing point (18.1b) rises. Thus, while the 1st belt shifter (18.1) moves upwards, it rotates the 1st pulley (19) and 2nd pulley (20) clockwise and 2nd belt shifter (18.2) moves downwards. After the upwards levitation force effect of the wave on the pontoon element (8) ends, the pontoon element (8) moves downwards along the main shaft (6) and auxiliary shaft (6a) due to its weight. The downward movement of the pontoon (8) leads to tension at the 1st belt shifter top fixing point (18.1 a). As the pontoon element (8) moves downwards, so does 1st belt shifter top fixing point (18.1 a). As the 1st belt shifter top fixing point (18.1 a) is fixed, it moves the 1st belt shifter (18.1) downwards. The 1st belt shifter (18.1) moves the 1st pulley (19) counterclockwise. The 2nd belt shifter (18.2) moves upwards and the 2nd Pulley (20) is rotated counterclockwise.

The upward movement of the pontoon element (8) rotates the 1st pulley (19) clockwise and its downward movement rotates the 1st pulley (19) counterclockwise. The input shaft of the reducer (21.1) at the center of the 1st pulley (19) transfers the movement of the 1st pulley (19) to the reducer mechanism. The input shaft of the reducer (21.1) has to move in the direction the 1st pulley (19), to which it is connected, moves.

The 1st pulley (19) rotates the input shaft of the reducer (21.1) clockwise by moving clockwise itself. The input shaft of the reducer (21.1) rotates the 1st gear (21.2) clockwise. The 1st gear (21.2) rotates the 2nd gear (21.4) counterclockwise. The 2nd gear (21.4) rotates the 1st cone shaft (21.3) counterclockwise. The 1st cone shaft (21.3) rotates the 3rd gear (21.5) counterclockwise. The 1st cone shaft (21.3) also rotates the 1st bearing (21.6) counterclockwise. 1st bearing gear (21.6a) rotates the 4th gear (21.8) clockwise and thus clockwise movement is obtained at the output shaft of the reducer (21.7). At the same time, while the 3rd gear (21.5) rotates counterclockwise, the 5th gear (21.11) rotates clockwise. The 5th gear (21.11) rotates the 2nd cone shaft (21.9) clockwise. The 2nd cone shaft (21.9) rotates the 2nd bearing (21.10) clockwise. However, the 2nd bearing (21.10) cannot transfer the movement to the 2nd bearing gear (21.10a). As the latching requirements (when a counterclockwise actuation is performed, the bearing is locked and the motion is transferred) have not been realized, the 2nd bearing (21.10) rotates clockwise out of gear. While the 2nd bearing (21.10) rotates clockwise, the 2nd bearing gear (21.10a) on it rotates counterclockwise. The rotation movement of the 2nd bearing gear (21.10a) is actuated by the 4th gear (21.8).

The pontoon element (8) rotates the 1st pulley (19) counterclockwise while it goes down. The 1 st pulley (19) rotates the input shaft of the reducer (21.1) to which it is embedded counterclockwise. The input shaft of the reducer (21.1) rotates the 1st gear (21.2) counterclockwise. The 1 st gear (21.2) rotates the 2nd gear (21.4) clockwise. The 2nd gear (21.4) rotates the 1st cone shaft (21.3) clockwise. The 1st cone shaft (21.3) rotates the 3rd gear (21.5) clockwise. The 1 st cone shaft (21.3) also rotates the 1st bearing (21.6) clockwise. The 3rd gear (21.5) rotates the 5th gear (21.11) counterclockwise. The 5th gear (21.11) rotates the 2nd cone shaft (21.9) counterclockwise. The 2nd cone shaft (21.9) rotates the 2nd bearing (21.10) counterclockwise (the bearing latching requirement is met). The 2nd bearing (21.10) rotates the 2nd bearing gear (21.10a) counterclockwise. The 2nd bearing gear (21.10a) rotates the 4th gear (21.8) clockwise. The 4th gear (21.8) rotates the output shaft of the reducer (21.7) clockwise. The 4th gear (21.8) rotates the 1st bearing gear (21.6a) counterclockwise (the bearing no. 21.6 rotates out of gear as the latching requirement has not been met).

As is seen, the output shaft of the reducer (21.7) rotates counterclockwise no matter what the direction of the movement coming to the input shaft of the reducer (21.1) is. The both of the movements coming to the input shaft of the reducer (21.1) are utilized. While the input shaft of the reducer (21.1) rotates clockwise, the 4th gear (21.8) receives the movement of the output shaft of the reducer (21.7) through the 1 st bearing gear (21.6a). While the input shaft of the reducer (21.1) rotates counterclockwise, the 4th gear (21.8) receives the movement of the output shaft of the reducer (21.7) through the 2nd bearing gear (21.10a). This movement continues as long as the 1st pulley (19) and 2nd pulley (20) rotate.

The torque, speed and the clockwise rotary motion required at the output of the reducer (21) are first stored as kinetic energy in the flywheel (22) element. When the flywheel (22) reaches the desired speed, the motion is transferred to the alternator (24) by engaging the clutch (23). The low-speed alternator (24) of permanent magnet type produces electricity with the effects of the transferred torque and speed. AC or DC type electricity might be produced based on the type of the alternator (24).

The potential energy of the pontoon (8) in the height it reached with the effect of the wave is based on the weight of the pontoon element (8). The pontoon (8) can only float on water if its specific bulk density is smaller than the density of the water. Below you can find the calculations regarding the maximum weight of the pontoon for it to float on water and the theoretical calculations regarding the amount of electric energy to be produced.

This invention might be produced at very different sizes as long as the geometrical proportions are not changed, but the radius of the pontoon element (8) has been chosen as 3 meters for the size we used in our theoretical calculations. Other sizes acceptable for this diameter are as follows: the distance between the horizontal projection line arising from the junction of the cylindrical part with the conical structure and the upper surface of the pontoon element (8) is 3 meters.

Based on this knowledge, the volume of the pontoon element (8) is calculated as:

$$V = 1/3*\pi*h*(a2+b2+a*b) + 1/4*\pi*D2*h$$

$$V = 1/3*\pi*3*(1,52+32+1,5*3) + 1/4*\pi*32*3$$

$$V = 70,64 \ m3$$

It's area is calculated as;

$$A1 = \pi*(a+b)*\sqrt{(b2+(b-a)2)}$$

$$A1 = \pi*(1,5+3)*\sqrt{(32+(3-1,5)2)}$$

$$A1 = 47,4 \ m2$$

$$A2 = \pi*d*h$$

$$A2 = \pi*3*3$$

$$A2 = 28,26 \ m2$$

$$Acover = (\pi Dalt2/4)+( \pi D\ddot{u}st2/4)$$

$$Acover = (\pi 32/4)+( \pi 62/4)$$

$$Acover = 35,32 \ m2$$

$$A = A1 + A2 + Acover$$

$$A = 47,4 + 28,26 + 35,32$$

$$A = 110,98 \ m2$$

When we assume that the material to be used in the pontoon element (8) is stainless steel sheet and the sheet thickness is 2cm, the total weight of the hollow pontoon element (8) is calculated as :

$$W = 7,6 \ t/m^3 \ * \ 0,02 \ m \ * \ 110,98 \ m^2 = 16,87 \ \text{Tones}$$

The density of the hollow pontoon element (8) is calculated as;

$$D_{pontoon} = W \ / \ V = 16,87 \ / \ 70,64 = 0,238 \ t/m^3$$

As $D_{sea} = 1,05 \ t/m^3 > d_{pontoon} = 0,238 \ t/m^3$, the pontoon element (8) floats on the water.
The pontoon element (8) shall not sink in the sea until its density is 1,05 t/m³, and in case the density of the pontoon element (8) equals to 1,05 t/m³, the weight of the pontoon element (8) is calculated as;

$$D_{pontoon} = W \ / \ V = \ 1,05 \ t/m^3$$

$$\text{If } D_{pontoon} = W \ / \ 70,64 = 1,05, \ W = 70,64 \ * \ 1,05 = 74,172 \ \text{Tones}$$

If we subtract the hollow weight of the pontoon element (8) from this value, we can define the maximum extra weight the pontoon element (8) might gain;

$$W_{extra} = 74,172 - 16,87 = 57,302 \ \text{Tones}$$

This means that the weight of the pontoon element (8) might be increased up to 57 tones, in this case, the pontoon element (8) shall continue floating on the sea.
The amount of electricity produced by the system in case the pontoon element (8) takes in extra 45 tones of sea water is calculated as;

$$W_{total} = 16,87 + 45 = 61,87 \ \text{Tones}$$

When we assume the average weight height on the coasts of Turkey as 1 meter (the average weight height of Turkey is 0,50 meters at the shores of the Black Sea and about 1,2 meters at the Balkan shores), and take into consideration that the wave rises 1 meter above the still water level (16) and likewise descends 1 meters, we find that the wave performs its motion within a vertical 2 meters. Based on this information, the amount of electric energy we shall produce through the system is calculated as;

$$E_p = m*g*h$$

$$E_p = 61870 \ kg*9,8m^2/sec*2m$$

$$E_p = \ 1.212.652 \ Nm$$

$$1Nm = 1 \ J = 1/3.600.000 \ kwh$$

$$E_p = 0{,}337 \text{ kwh (for a single wave)}$$

The wave period of Turkey is stated as minimum 7 waves per minute in the researches. Assuming that the wave period is minimum 7 waves per minute, the amount of electric energy produced within an hour is calculated as;

$$E_p = 0{,}337 * 7 * 60 = 141{,}54 \text{ kwh}$$

The amount of electric energy produced in 1 week is calculated as;

$$E_p = 141{,}54 * 24 = 3.396{,}96 \text{ kwh/day}$$

The present invention, which is capable of producing 140 KW electricity per hour, can serve as a power plant. Both the potential and kinetic energy of the wave is utilized to the maximum and a serious amount of electricity is produced. As it is situated on the coast, neither on the seaside nor on the open sea, it shall be easy to transmit energy and to have access to the system. It is a cost-effective system as it doesn't necessitate a long transmission line. When it has been placed side-by-side on the shores, it shall be used as a breakwater and thus have an important production volume. It adaptability to different wave heights allows it to be used on the rocky shores which are not suitable for tourism, the islands, around the breakwaters and on the ports.

We aimed at evaluating an environment friendly, cheap, clean, ecologist and great energy source with the present invention. Meeting the energy requirements arising from the rising population and developing economy shall be realized through this invention.

**Claims**

1. An electricity production plant changing wave energy into electric energy and it is **characterised in that**; it comprises,

- a pontoon element (8) which is placed on a main shaft (6), the main shaft (6) goes through the center of the pontoon element (8) and the pontoon element (8) moves only vertically on this main shaft (6) with the help of the wave motions and realizes this vertical movement through the truncated conical geometrical structure it owns and having a cylindrical part lying downwards from the lower part of this truncated conical structure;
- a main shaft (6) which has been anchored to a foundation system (15) with a main shaft lower fixing point (10) from the bottom and to a main shaft connector plate (5) with a main shaft upper fixing point (11) from the top and which goes through an upper spring (7) anchored to the bottom of a platform (12) and a lower spring (7a) anchored to the foundation system (15);
- An auxiliary shaft (6a) which is anchored to the platform (12) from the upper end and to the foundation system (15) from the lower end and placed in parallel with the main shaft (6) and goes through an embedding element (6b) fixed on the pontoon element (8) and prevents the axial rotation movement of the pontoon element (8);
- a semi-circular shear wall (2) which affects the motion of the approaching waves and adds to the stability of the main shaft (6) and takes the main shaft (6) as its center while rising in parallel with the main shaft (6);
- a shear wall support structure (1) which is placed at the back part of the shear wall (2) and is anchored to it and adds to the stability of the shear wall (2);
- an attachment (4) which anchors the main shaft connector plate (5) to the supporting profiles of the shear wall (2a);
- A main shaft connector plate (5) to which the main shaft (6) has been anchored from the top and which has been connected to the shear wall supporting profile (2a) comprised of the U profile with the help of the attachment (4);
- A wave guide wall (9) which affects the horizontal movements of the approaching waves, unifies with the shear wall (2) by rising at a distance from the front part of the shear wall (2) and with a specific angle over the foundation system (15) and remains anchored to the semi-circular shear wall (2) along this semi-circle;
- an upper spring (7) which has been anchored to the platform (12) at one end from the top to prevent the pontoon element (8) from causing harm by crashing against the foundation system (15) and the upper platform (12) and a lower spring (7a) which has been anchored to the foundation system (15) at one end from the bottom;

- a sealing gasket (3) which has been anchored to the pontoon element (8) to provide water tightness between the pontoon element (8) and the shear wall (2);

- a belt ring (18) which is comprised of the 1st belt shifter (18.1) and the 2nd belt shifter (18.2) and allows for the linear motion obtained from the pontoon element (8) moving with the effect of the waves to be transmitted to the 1st pulley (19) and thus to be changed into rotary motion;

- the 1st belt shifter (18.1) which has been anchored to the 1st belt shifter top fixing point (18.1 a) placed on the pontoon element (8) from the top and to 1st belt shifter bottom fixing point (18.1b) placed under the pontoon element (8) from the bottom;

- the 2nd belt shifter (18.2) which is located between the 1st pulley (19) and the 2nd pulley (20) by getting through the belt transition channel (8c) in the pontoon element (8);

- the 1st pulley (19) which allows for the transmission of the linear motion of the belt ring (18) to the input shaft of reducer (21.1) by changing the linear motion into rotary motion and which is placed on the platform (12);

- the 2nd pulley (20) which enables the belt ring (18) to operate tensely and in the desired position and is placed on the foundation system (15);

- a flywheel (22) which is placed on the platform (12) and in which the torque, speed and clockwise rotary motion required at the output of the reducer (21) is stored as kinetic energy.

**2.** A mechanism according to Claim 1, and it is **characterised in that**, it comprises; water inlet/ outlet (13) and air inlet/ outlet (14) which allows for water or air input to and output from the pontoon element (8) via a water inlet/ outlet (13) which is placed under the pontoon element (8) and allows for water input and output and a air inlet/ outlet (14) which is placed at the upper part of the pontoon element (8) and allows for air input/ output.

**3.** A mechanism according to Claim 1, and it is **characterised in that**, it comprises; winglets (8a) and a circular wall (8b) which form cells in the pontoon element (8) and prevents the horizontal movement of the water entering into the pontoon element (8) and of the pontoon element (8) by confining this water within these cells.

**Patentansprüche**

**1.** Stromerzeugungsanlage, die Wellenenergie in elektrische Energie umwandelt und **dadurch gekennzeichnet ist, dass** sie Folgendes umfasst:

- ein Pontonelement (8), das auf einer Hauptwelle (6) platziert ist, die Hauptwelle (6) durch die Mitte des Pontonelementes (8) führt und das Pontonelement (8) sich nur vertikal auf dieser Hauptwelle (6) mit Hilfe der Wellenbewegungen bewegt und diese vertikale Bewegung durch die geometrische Kegelstumpfstruktur realisiert, die sie hat, und einen zylindrischen Teil aufweist, der unterhalb des unteren Teils dieser Kegelstumpfstruktur liegt;

- eine Hauptwelle (6), die an einem Fundamentsystem (15) mit einem unteren Hauptwellen-Befestigungspunkt (10) von unten und an einer Hauptwellen-Verbindungsplatte (5) mit einem oberen Hauptwellen-Befestigungspunkt (11) von oben verankert ist und die durch eine obere Feder (7) geht, welche am Boden einer Plattform (12) verankert ist, und eine untere Feder (7a) geht, die am Fundamentsystem (15) verankert ist;

- eine Hilfswelle (6a), die an der Plattform (12) vom oberen Ende und am Fundamentsystem (15) vom unteren Ende verankert und parallel zur Hauptwelle (6) platziert ist und parallel zur Hauptwelle (6) verläuft und durch ein Einbettungselement (6b) geht, das am Pontonelement (8) befestigt ist und die axiale Rotationsbewegung des Pontonelementes (8) verhindert;

- eine halbkreisförmige Schwerwand (2), die die Bewegung der ankommenden Wellen beeinflusst und zur Stabilität der Hauptwelle (6) beiträgt und die Hauptwelle (6) in ihrer Mitte führt, während sie parallel zur Hauptwelle (6) ansteigt;

- eine Scherwandstützstruktur (1), die am Rückteil der Schwerwand (2) platziert ist und daran verankert ist und zur Stabilität der Schwerwand (2) beiträgt;

- eine Befestigung (4), die die Hauptwellen-Verbindungsplatte (5) an den Stützprofilen der Schwerwand (2a) verankert;

- eine Hauptwellenverbindungsplatte (5), an der die Hauptwelle (6) von oben verankert wurde und die mit dem Scherwandstützprofil (2a), welches aus dem U-Profil besteht, mit Hilfe der Befestigung (4) verbunden wurde;

- eine Wellenleiterwand (9), die die horizontalen Bewegungen der ankommenden Wellen beeinflusst, sich mit der Scherwand (2) durch Aufragen in einem Abstand vom Vorderteil der Scherwand (2) und mit einem speziellen Winkel gegenüber dem Fundamentsystem (15) vereinigt und an der halbkreisförmigen Scherwand (2) entlang dieses Halbkreises verankert bleibt;

- eine obere Feder (7), die an der Plattform (12) an einem Ende von oben verankert ist, um das Pontonelement (8) daran zu hindern, Schäden durch den Zusammenstoß mit dem Fundamentsystem (15) und die obere Plattform (12) und eine untere Feder (7a) zu verursachen, die am Fundamentsystem (15) an einem Ende vom Boden verankert ist;

- eine Dichtung (3), die am Pontonelement (8) verankert ist, um für Wasserdichtheit zwischen dem Pontonelement (8) und der Scherwand (2) zu sorgen;

- ein Bandring (18), der sich aus dem ersten Bandabwerfer (18.1) und dem zweiten Bandabwerfer (18.2) zusammensetzt und die lineare Bewegung ermöglicht, welche aus dem Pontonelement (8) gewonnen wird, das sich mit dem Effekt bewegt, dass Wellen auf die erste Riemenscheibe (19) übertragen werden und daher in eine Drehbewegung versetzt werden;

- dem ersten Bandabwerfer (18.1), der am oberen Befestigungspunkt (18.1a) des ersten Bandabwerfers verankert ist, welcher auf dem Pontonelement (8) von oben platziert ist, und am unteren Befestigungspunkt (18.1b) des ersten Bandabwerfers verankert ist, welcher unter dem Pontonelement (8) von unten platziert ist;

- dem zweiten Bandabwerfer (18.2), der sich zwischen der ersten Riemenscheibe (19) und der zweiten Riemenscheibe (20) befindet, indem er durch den Bandübergangskanal (8c) in das Pontonelement (8) gelangt;

- die erste Riemenscheibe (19), die die Übertragung der linearen Bewegung des Bandrings (18) auf die Eingangswelle des Reduzierstücks (21.1) ermöglicht, indem die lineare Bewegung in eine Drehbewegung umgewandelt wird, und die sich auf der Plattform (12) befindet;

- die zweite Riemenscheibe (20), die dem Bandring (18) ermöglicht, gespannt und in der gewünschten Position zu arbeiten, und sich auf dem Fundamentsystem (15) befindet;

- ein Schwungrad (22), das sich auf der Plattform (12) befindet und in dem das Drehmoment, die Geschwindigkeit und die Drehbewegung im Uhrzeigersinn, die am Ausgang des Reduzierstücks (21) benötigt werden, als kinetische Energie gespeichert werden.

2. Mechanismus nach Anspruch 1, **dadurch gekennzeichnet, dass** er Folgendes umfasst: Wassereinlass/-auslass (13) und Lufteinlass/-auslass (14), der den Wasser- oder Lufteintritt in das Pontonelement (8) oder den Austritt aus demselben über einen Wassereinlass/-auslass (13) ermöglicht, der sich unter dem Pontonelement (8) befindet und den Wassereinlass und-auslass ermöglicht, und einen Lufteinlass/-auslass (14), der sich im oberen Teil des Pontonelementes (8) befindet und den Lufteinlass/-auslass ermöglicht.

3. Mechanismus nach Anspruch 1, **dadurch gekennzeichnet, dass** er Folgendes umfasst: Winglets (8a) und eine kreisförmige Wand (8b), die Zellen im Pontonelement (8) bilden und die horizontale Bewegung des Wassers, das in das Pontonelement (8) eintritt, und des Pontonelementes (8) verhindern, indem sie dieses Wasser auf diese Zellen einschränken.


**Revendications**

1. Centrale de production d'électricité changeant une énergie d'onde en énergie électrique, **caractérisée en ce qu'**elle comprend :

- un élément de ponton (8) qui est placé sur un arbre principal (6), dans laquelle l'arbre principal (6) traverse le centre de l'élément de ponton (8) et l'élément de ponton (8) ne se déplace que verticalement sur cet arbre principal (6) à l'aide des mouvements d'ondes et réalise ce déplacement vertical par le biais de la structure géométrique conique tronquée qu'il possède, et ayant une partie cylindrique reposant vers le bas à partir de la partie inférieure de cette structure conique tronquée ;

- un arbre principal (6) qui est ancré à un système de fondation (15) avec un point de fixation inférieur d'arbre principal (10) à partir du bas et à une plaque de connecteur d'arbre principal (5) avec un point de fixation supérieur d'arbre principal (11) à partir du haut et qui passe à travers un ressort supérieur (7) ancré au bas d'une plate-forme (12) et un ressort inférieur (7a) ancré au système de fondation (15) ;

- un arbre auxiliaire (6a) qui est ancré à la plate-forme (12) à partir de l'extrémité supérieure et au système de fondation (15) à partir de l'extrémité inférieure et placé en parallèle à l'arbre principal (6) et qui passe à travers un élément d'encastrement (6b) fixé sur l'élément de ponton (8) et qui empêche le mouvement de rotation axial de l'élément de ponton (8) ;

- une paroi de cisaillement semi-circulaire (2) qui affecte le déplacement des ondes approchant et renforce la stabilité de l'arbre principal (6) et prend l'arbre principal (6) en tant que son centre en montant parallèlement à l'arbre principal (6) ;

- une structure de support de paroi de cisaillement (1) qui est placée à la partie arrière de la paroi de cisaillement (2) et est ancrée à celle-ci et renforce la stabilité de la paroi de cisaillement (2) ;

- un attachement (4) qui ancre la plaque de connecteur d'arbre principal (5) aux profils de support de la paroi de cisaillement (2a) ;

- une plaque de connecteur d'arbre principal (5) à laquelle l'arbre principal (6) est ancré à partir du haut et qui est reliée au profil de support de paroi de cisaillement (2a) composé du profil en U à l'aide de l'attachement (4) ;

- une paroi de guide d'onde (9) qui affecte les mouvements horizontaux des ondes approchant, s'unie à la paroi de cisaillement (2) en montant à une distance à partir de la partie avant de la paroi de cisaillement (2) et à un angle spécifique par rapport au système de fondation (15) et reste ancrée à la paroi de cisaillement semi-circulaire (2) le long de ce demi-cercle ;

- un ressort supérieur (7) qui est ancré à la plate-forme (12) à une extrémité à partir du haut pour empêcher que l'élément de ponton (8) ne provoque d'avarie en s'écrasant contre le système de fondation (15) et la plate-forme supérieure (12) et un ressort inférieur (7a) qui est ancré au système de fondation (15) à une extrémité à partir du bas ;

- un joint d'étanchéité (3) qui est ancré à l'élément de ponton (8) pour assurer une étanchéité à l'eau entre l'élément de ponton (8) et la paroi de cisaillement (2) ;

- un anneau de courroie (18) qui se compose du premier passe-courroie (18.1) et du deuxième passe-courroie (18.2) et permet que le mouvement linéaire obtenu à partir de l'élément de ponton (8) se déplaçant sous l'effet des ondes à transmettre à la première poulie (19) soit changé en mouvement rotatif ;

- le premier passe-courroie (18.1) qui est ancré au point de fixation supérieur de premier passe-courroie (18.1a) placé sur l'élément de ponton (8) à partir du haut et au point de fixation inférieur de premier passe-courroie (18.1b) placé sous l'élément de ponton (8) à partir du bas ;

- le deuxième passe-courroie (18.2) qui est situé entre la première poulie (19) et la deuxième poulie (20) en passant à travers le canal de transition de courroie (8c) dans l'élément de ponton (8) ;

- la première poulie (19) qui permet la transmission du mouvement linéaire de l'anneau de courroie (18) à l'arbre d'entrée de réducteur (21.1) en changeant le mouvement linéaire en mouvement rotatif et qui est placée sur la plate-forme (12) ;

- la deuxième poulie (20) qui permet à l'anneau de courroie (18) de fonctionner en étant tendu et à la position souhaitée et qui est placé sur le système de fondation (15) ;

- un volant (22) qui est placé sur la plate-forme (12) et dans lequel le couple, la vitesse et le mouvement rotatif dans le sens des aiguilles d'une montre nécessaires à la sortie du réducteur (21) sont stockés sous forme d'énergie cinétique.

2. Mécanisme selon la revendication 1, **caractérisé en ce qu'**il comprend une entrée/sortie d'eau (13) et une entrée/sortie d'air (14) permettant à l'eau et à l'air d'entrer et de sortir de l'élément de ponton (8) par l'intermédiaire d'une entrée/sortie d'eau (13) qui est placée sous l'élément de ponton (8) pour permettre à l'eau d'entrer et de sortir et d'une entrée/sortie d'air (14) qui est placée à la partie supérieure de l'élément de ponton (8) pour permettre à l'air d'entrer et de sortir.

3. Mécanisme selon la revendication 1, **caractérisé en ce qu'**il comprend : des ailettes (8a) et une paroi circulaire (8b) formant des cellules dans l'élément de ponton (8) et empêchant le mouvement horizontal de l'eau entrant dans l'élément de ponton (8) et de l'élément de ponton (8) en confinant cette eau à l'intérieur de ces cellules.

Figure 1

Figure 2

Figure 3

Figure 4

Figure 5

Figure 6

EP 2 649 305 B1

21.1    21.2

21    21.6

21.4    21.3

21.8

21.10.a    21.6.a

21.7

21.11

21.9

21.10

Figure 7

21

Figure 8

**EP 2 649 305 B1**

## REFERENCES CITED IN THE DESCRIPTION

### Patent documents cited in the description

- US 2010043425 A
- WO 200908522 A
- GR 1006476 B2
- US 20070222221 A1
- US 20030227173 A1